# DEMANDE DE BREVET EUROPEEN

(11) **EP 0 826 904 A1**
(43) Date de publication de la demande: **04.03.1998**
(21) Numéro de dépôt: 97401865.7
(22) Date de dépôt: 01.08.1997
(51) Int. Cl.: F16H 7/00, F16H 7/02

(54) **Mécanisme de réduction de vitesse de rotation implanté entre un organe d'entraînement et un organe entraîné**

(30) Priorité: 03.09.1996 FR 9610731
(71) Demandeur: ECIA - EQUIPEMENTS ET COMPOSANTS POUR L'INDUSTRIE AUTOMOBILE, F-25400 Audincourt (FR)
(72) Inventeur: Escaravage, Gérard, 25700 Valentigney (FR)
(74) Mandataire: Habasque, Etienne Joel Jean-François

(57) **Abrégé**

Ce mécanisme de réduction de vitesse de rotation implanté entre un organe d'entraînement (1) et un organe entraîné (2), rotatifs, est caractérisé en ce qu'il comporte un boîtier (4) disposé autour de l'organe d'entraînement (1) et dans lequel est disposé un bras rotatif (5) dont une extrémité (6) est reliée à l'organe d'entraînement (1) et dont l'autre extrémité (7) comporte des moyens (8) de réception à rotation d'un pignon double (9), comportant une première partie dentée (10) adaptée pour coopérer avec une couronne dentée (11) fixe par rapport au boîtier (4) et une seconde partie dentée (12), de plus petit diamètre que la première et adaptée pour être reliée par l'intermédiaire d'une courroie crantée (13) à une portion dentée (14) correspondante de l'organe entraîné (2).

## Description

La présente invention concerne un mécanisme de réduction de vitesse de rotation implanté entre un organe d'entraînement et un organe entraîné, rotatifs.

Un tel mécanisme de réduction peut par exemple être utilisé entre un organe de raccordement d'un moteur électrique à un organe d'équipement d'un véhicule automobile et une partie d'un codeur de position, permettant de déterminer la position de l'organe correspondant du véhicule.

On sait en effet que de tels codeurs de position sont par exemple du type numérique et absolu et fournissent des informations de position exploitables sur un tour d'un disque de codage de position d'un tel codeur.

Cependant, un tel codeur ne peut être associé à un moteur électrique d'entraînement que par l'intermédiaire d'un mécanisme de réduction de vitesse de rotation.

En effet, si par exemple un tel codeur est associé à un siège de véhicule automobile, pour contrôler par exemple la position axiale de celui-ci dans l'habitacle du véhicule, le réglage de cette position axiale du siège, nécessite en général, un nombre de tours de rotation du moteur important, par exemple 1000.

Dans ce cas, le mécanisme de réduction interposé entre le moteur et le codeur doit avoir un rapport de réduction de mille à un.

Une telle réduction, qui peut être obtenue par association de roues dentées complémentaires implantées dans un volume déterminé, nécessite l'utilisation de petits modules et de plusieurs trains d'engrenages associés, dont la maîtrise des jeux angulaires exige des précisions élevées de forme et de dimension, et donc des tolérances de fabrication très serrées.

On conçoit qu'un tel mécanisme présente un certain nombre d'inconvénients, notamment au niveau du nombre de pièces utilisées, des précisions requises lors de la fabrication de celles-ci et donc des coûts de fabrication correspondants d'un tel mécanisme.

Le but de l'invention est donc de résoudre ces problèmes.

A cet effet, l'invention a pour objet un mécanisme de réduction de vitesse de rotation implanté entre un organe d'entraînement et un organe entraîné, rotatifs, caractérisé en ce qu'il comporte un boîtier, disposé autour de l'organe d'entraînement et dans lequel est disposé un bras rotatif, dont une extrémité est reliée à l'organe d'entraînement et dont l'autre extrémité comporte des moyens de réception à rotation d'un pignon double, comportant une première partie dentée adaptée pour coopérer avec une couronne dentée fixe par rapport au boîtier et une seconde partie dentée, de plus petit diamètre que la première et adaptée pour être reliée par l'intermédiaire d'une courroie crantée à une portion dentée correspondante de l'organe entraîné.

Avantageusement, l'organe entraîné se présente sous la forme d'un manchon tubulaire disposé autour de l'organe d'entraînement et dont une première extrémité comporte la portion dentée correspondante et s'étend entre le pignon double et l'organe d'entraînement et cette extrémité de l'organe entraîné comporte également un épaulement de centrage et de guidage adapté pour coopérer avec une portée complémentaire du bras.

L'invention sera mieux comprise à la lecture de la description qui va suivre, donnée uniquement à titre d'exemple et faite en se référant aux dessins annexés, sur lesquels :
- la Fig.1 représente une demi-vue partielle en coupe d'un mécanisme de réduction de vitesse selon l'invention;
- la Fig.2 représente une vue de dessus d'un tel mécanisme, illustrant le fonctionnement de celui-ci;
- la Fig.3 représente une vue de côté en coupe d'un bras entrant dans la constitution d'un tel mécanisme; et
- la Fig.4 représente une vue de dessus d'un tel bras.

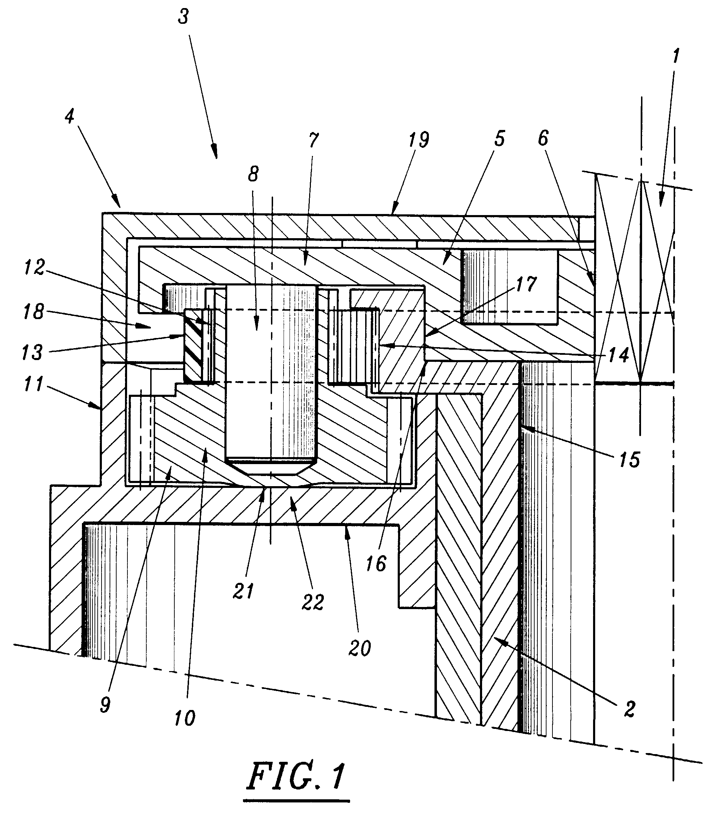

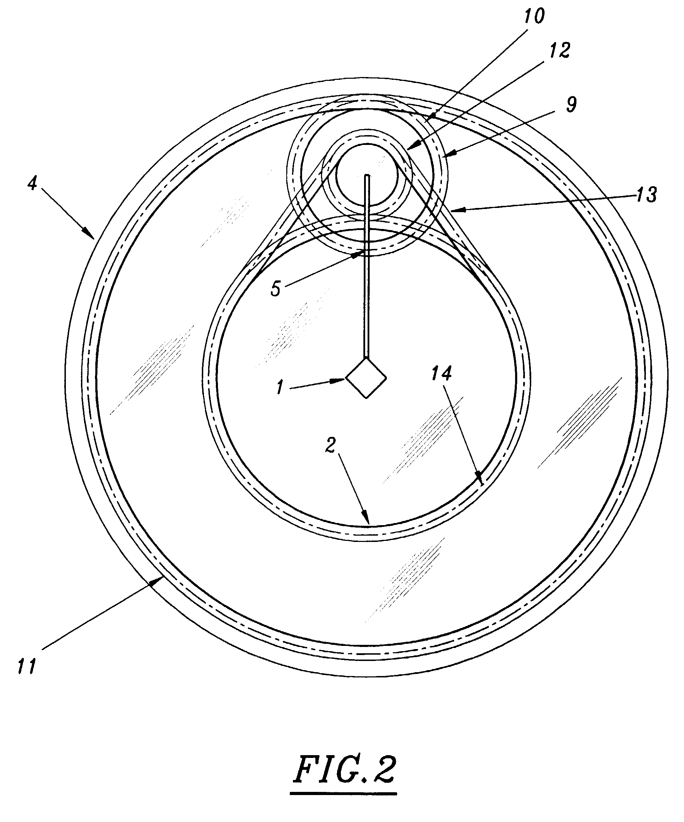

On reconnaît en effet sur ces figures, un mécanisme de réduction de vitesse de rotation, implanté entre un organe d'entraînement désigné par la référence générale 1 sur les figures 1 et 2, et un organe entraîné désigné par la référence générale 2, ces organes d'entraînement et entraînés étant rotatifs.

L'organe d'entraînement 1 est par exemple interposé entre un moteur électrique et un organe quelconque d'équipement d'un véhicule, tel qu'une partie d'un siège de celui-ci (non représentés).

Le mécanisme est désigné par la référence générale 3 sur ces figures et comporte un boîtier désigné par la référence générale 4, disposé symétriquement autour de l'organe d'entraînement 1 et dans lequel est disposé un bras rotatif, désigné par la référence générale 5, dont une extrémité 6 est reliée à l'organe d'entraînement 1 et dont une autre extrémité 7 comporte des moyens tels qu'un pion 8 de réception à rotation d'un pignon double, désigné par la référence générale 9 sur ces figures.

Ce pignon double 9 comporte une première partie dentée 10 adaptée pour coopérer avec une couronne dentée 11 fixe par rapport au boîtier 4 et une seconde partie dentée 12, de plus petit diamètre que la première, 10, et adaptée pour être reliée par l'intermédiaire d'une courroie crantée 13 à une portion dentée correspondante 14 de l'organe entraîné 2.

Avantageusement, l'organe entraîné 2 se présente sous la forme d'un manchon tubulaire disposé autour de l'organe d'entraînement 1 et dont une première extrémité, par exemple 15, comporte la portion dentée 14 correspondante et s'étend entre le pignon double 9 et l'organe d'entraînement 1.

Cette extrémité de l'organe entraîné comporte également un épaulement 16 de centrage et de guidage adapté pour coopérer avec une portée complémentaire 17 du bras 5.

Par ailleurs, le pignon double 9, le pion 8 et l'extrémité correspondante 7 du bras 5 sont montés déplaçables par exemple dans un logement 18 du boîtier, ménagé entre deux parois transversales 19 et 20 de celui-ci, le pignon double 9 comportant une surface de contact 21 en appui sur une surface de guidage complémentaire 22 de la paroi transversale 20 du boîtier, pour maintenir ce pignon 9 en position sur le pion 8 et permettre son guidage lors de ses déplacements.

Le fonctionnement d'un tel dispositif apparaît plus clairement en regard de la figure 2, sur laquelle on reconnaît l'organe d'entraînement 1, le bras 5, le pignon double 9 comportant la première partie 10 et la seconde partie 12 dentées de celui-ci, la courroie crantée 13, la portion dentée 14 de l'organe entraîné 2 et la couronne dentée 11 du boîtier 4 du mécanisme.

Avantageusement, la première partie dentée 10 du pignon double 9 comporte vingt-sept (27) dents, la seconde partie dentée 12 de celui-ci comporte dix (10) dents, la couronne dentée 11 du boîtier comporte cent (100) dents et la portion dentée 14 de l'organe entraîné 2, comporte trente-sept (37) dents.

La rotation du moteur se traduit par la rotation de l'organe d'entraînement 1 et donc la rotation du bras 5 dans le boîtier 4.

Ainsi pour une rotation du bras 5 dans un sens horaire (Fig.2), le pignon double 9 associé à la couronne dentée 11 du boîtier par l'intermédiaire de la première partie 10 de celui-ci, décrit autour de son axe, une rotation de sens anti-horaire, de même que la seconde partie 12 de celui-ci.

La courroie crantée 13, associée à cette seconde partie 12 du pignon 9, communique alors par l'intermédiaire de la portion dentée 14, une rotation de sens anti-horaire à l'organe entraîné 2.

Les nombres de dents donnés précédemment conduisent à un rapport de réduction tel que pour un tour de sens horaire de rotation du bras 5, correspond 1,001 tour de sens anti-horaire de rotation de l'organe entraîné 2.

La rotation résultante de celui-ci est donc de 0,001 tour de sens anti-horaire.

On conçoit alors qu'avec un tel rapport de réduction, un tel mécanisme peut trouver de nombreuses applications, notamment entre un organe de raccordement de la sortie d'un moteur d'entraînement à un organe d'équipement de véhicule automobile, tel que par exemple une partie de siège de celui-ci, l'organe de raccordement constituant l'organe d'entraînement 1 décrit précédemment, tandis que l'organe entraîné 2 du mécanisme peut être relié par exemple par sa seconde extrémité, c'est-à-dire celle opposée à celle comprenant la portion dentée 14, à une piste codée d'un codeur de position.

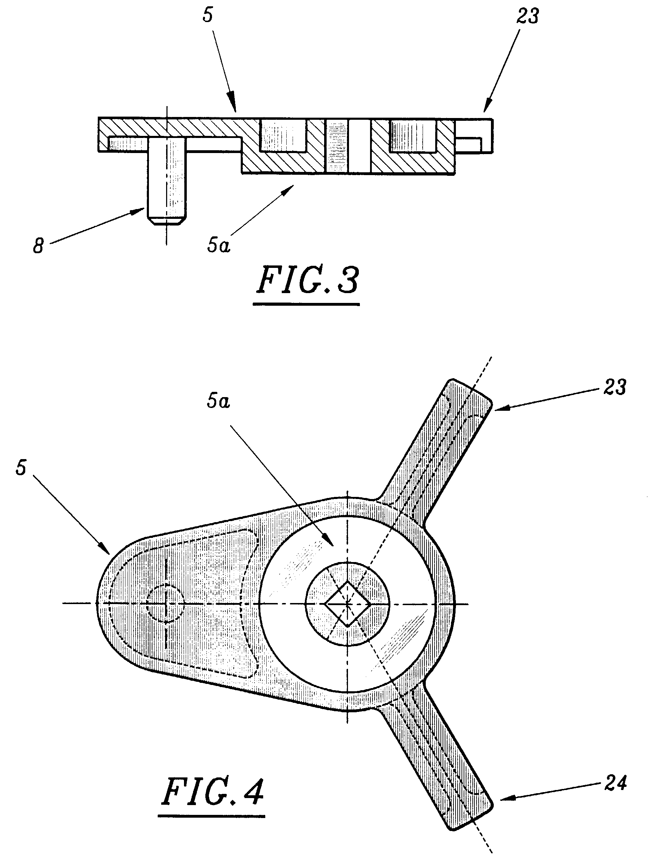

On a représenté sur les figures 3 et 4, deux vues du bras 5 entrant dans la constitution d'un tel mécanisme.

Comme cela a été décrit précédemment, celui-ci comporte à une extrémité, le pion 8 et à une autre extrémité, des moyens de fixation 5a de celui sur l'organe d'entraînement, ces moyens se présentant par exemple sous la forme d'un moyeu de fixation.

De plus, ce bras et plus particulièrement le moyeu 5a de celui-ci peut également être muni de moyens d'équilibrage en rotation et de guidage de ses déplacements dans le boîtier 4, ces moyens d'équilibrage et de guidage étant constitués par exemple par deux parties en saillie désignées par les références générales 23 et 24 sur ces figures, s'étendant à partir du moyeu de fixation 5a de celui-ci sur l'organe d'entraînement.

Ces parties en saillie permettent à la fois d'équilibrer le bras lors de sa rotation et de guider ses déplacements dans le boîtier de réception du mécanisme.

On conçoit alors que le mécanisme selon l'invention présente un certain nombre d'avantages par rapport aux mécanismes de réduction de l'état de la technique, notamment au niveau de la simplicité de sa structure, du nombre réduit de pièces utilisées et donc de ses coûts de fabrication et ce tout en permettant d'obtenir un rapport de réduction important

Il va de soi bien entendu que différents modes de réalisation de ce mécanisme peuvent être envisagés.

C'est ainsi que dans l'exemple illustré sur les figures, la couronne dentée 11 est formée sur la paroi interne du boîtier 4 de réception du mécanisme.

Cette couronne peut bien entendu être formée sur une pièce séparée de ce boîtier puis fixée sur celui-ci.

Par ailleurs, le pignon double 9 qui dans l'exemple illustré, est venu d'une seule pièce, peut également être formé de deux pignons séparés et associés l'un à l'autre par tous moyens appropriés.

## Revendications

1. Mécanisme de réduction de vitesse de rotation implanté entre un organe d'entraînement (1) et un organe entraîné (2), rotatifs, caractérisé en ce qu'il comporte un boîtier (4), disposé autour de l'organe d'entraînement (1) et dans lequel est disposé un bras rotatif (5) dont une extrémité (6) est reliée à l'organe d'entraînement (1) et dont l'autre extrémité (7) comporte des moyens (8) de réception à rotation d'un pignon double (9) comportant une première partie dentée (10) adaptée pour coopérer avec une couronne dentée (11) fixe par rapport au boîtier (4) et une seconde partie dentée (12), de plus petit diamètre que la première et adaptée pour être reliée par l'intermédiaire d'une courroie crantée (13) à une portion dentée (14) correspondante de l'organe entraîné (2).

2. Mécanisme selon la revendication 1, caractérisé en ce que l'organe entraîné se présente sous la forme d'un manchon tubulaire (2) disposé autour de l'organe d'entraînement (1) et dont une première extrémité (15) comporte la portion dentée correspondante (14) et s'étend entre le pignon double (9) et l'organe d'entraînement (1).

3. Mécanisme selon la revendication 2, caractérisé en ce que la première extrémité du manchon formant l'organe entraîné comporte un épaulement (16) de centrage et de guidage adapté pour coopérer avec une portée complémentaire (17) du bras (5).

4. Mécanisme selon l'une quelconque des revendications précédentes, caractérisé en ce que la couronne dentée (11) fixe par rapport au boîtier (4) est ménagée sur la surface interne de celui-ci.

5. Mécanisme selon l'une quelconque des revendications précédentes, caractérisé en ce que le pignon double (9), le pion (8) et l'extrémité correspondante du bras (5) sont déplaçables dans un logement (18) du boîtier (4), ménagé entre deux parois transversales (19,20) de celui-ci, le pignon double (9) comportant une surface de contact (21) adaptée pour coopérer avec une surface de guidage complémentaire (22) d'une paroi transversale (20) du boîtier, pour le maintenir en position sur les moyens de réception correspondant (8) du bras.

6. Mécanisme selon l'une quelconque des revendications précédentes, caractérisé en ce que la première partie dentée (10) du pignon double (9) comporte vingt-sept dents, la seconde partie (12) de celui-ci comporte dix dents, la couronne dentée (11) du boîtier (4) comporte cent dents et la portion dentée (14) correspondante de l'organe entraîné (2) comporte trente-sept dents.

7. Mécanisme selon l'une quelconque des revendications précédentes, caractérisé en ce que le bras (5) comporte des moyens (23,24) d'équilibrage et de guidage en rotation de celui-ci dans le boîtier (4).

8. Mécanisme selon la revendication 7, caractérisé en ce que les moyens d'équilibrage et de guidage comprennent des parties en saillie (23,24) d'un moyeu (5a) de fixation du bras sur l'organe d'entraînement (1).

9. Mécanisme selon l'une quelconque des revendications précédentes, caractérisé en ce que l'organe d'entraînement (1) est un organe de raccordement de la sortie d'un moteur d'entraînement à un organe d'équipement d'un véhicule automobile et l'organe entraîné (2) est relié à sa seconde extrémité à une partie d'un codeur de position.
